# EUROPEAN PATENT APPLICATION

(11) **EP 4 372 852 A1**
(43) Date of publication of application: **22.05.2024**
(21) Application number: 22842093.1
(22) Date of filing: 11.07.2022
(51) Int. Cl.: H01M 8/0241, H01M 8/0232, H01M 8/0236, H01M 8/0245, H01M 8/04, H01M 8/12, H01M 8/2475

(54) **ELECTROCHEMICAL CELL, ELECTROCHEMICAL CELL DEVICE, MODULE, AND MODULE STORAGE DEVICE**

(30) Priority: 12.07.2021 JP 2021115330
(71) Applicant: Kyocera Corporation, Kyoto-shi Kyoto 612-8501 (JP)
(72) Inventor: SHIRAMOMO, Sasuke, Kyoto-shi, Kyoto 612-8501 (JP); IMANAKA, Kazuya, Kyoto-shi, Kyoto 612-8501 (JP)
(74) Representative: Viering, Jentschura & Partner mbB Patent- und Rechtsanwälte
(86) International application number: PCT/JP2022/027317
(87) International publication number: WO 2023/286749

(57) **Abstract**

An electrochemical cell includes a gas permeable member (2 and 5), a metal member (4 and 9), and an electrically conductive member (9). The gas permeable member (2 and 5) through which a reducing gas is permeable has electrical conductivity. The metal member (4 and 9) contains chromium and is connected to the gas permeable member (2 and 5). The electrically conductive member (9) is porous and is located between the gas permeable member (2 and 5) and the metal member (4 and 9). The electrically conductive member (9) contains metal particles, and a first element whose first ionization energy and free energy of formation of an oxide per mole of oxygen are smaller than those of chromium.

## Description

### TECHNICAL FIELD

The present disclosure relates to an electrochemical cell, an electrochemical cell device, a module, and a module housing device.

### BACKGROUND OF INVENTION

In recent years, various fuel cell stack devices each including a plurality of fuel cells have been proposed, as next-generation energy. A fuel cell is a type of electrochemical cell capable of obtaining electrical power by using a reducing gas such as a hydrogen-containing gas and an oxygen-containing gas such as air.

### CITATION LIST

### PATENT LITERATURE

Patent Document 1: WO2009/131180

### SUMMARY

An electrochemical cell according to an aspect of an embodiment includes a gas permeable member, a metal member, and an electrically conductive member. The gas permeable member through which a reducing gas is permeable has electrical conductivity. The metal member contains chromium and is connected to the gas permeable member. The electrically conductive member is porous and is located between the gas permeable member and the metal member. The electrically conductive member contains metal particles, and a first element whose first ionization energy and free energy of formation of an oxide per mole of oxygen are smaller than those of chromium.

An electrochemical cell device of the present disclosure includes a cell stack including the electrochemical cell described above.

A module of the present disclosure includes the electrochemical cell device described above and a storage container housing the electrochemical cell device.

A module housing device of the present disclosure includes the module described above, an auxiliary device configured to operate the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 1D is a vertical cross-sectional view illustrating an example of the electrochemical cell according to the first embodiment.
FIG. 2A is a cross-sectional view illustrating a configuration example of an interconnector and an electrically conductive member.
FIG. 2B is a cross-sectional view illustrating a configuration example of an interconnector and an electrically conductive member.
FIG. 2C is a cross-sectional view illustrating a configuration example of an interconnector and an electrically conductive member.
FIG. 3A is a perspective view illustrating an example of an electrochemical cell device according to the first embodiment.
FIG. 3B is a cross-sectional view taken along a line X-X in FIG. 3A.
FIG. 3C is a top view illustrating an example of the electrochemical cell device according to the first embodiment.
FIG. 4 is an exterior perspective view illustrating an example of a module according to the first embodiment.
FIG. 5 is an exploded perspective view schematically illustrating an example of a module housing device according to the first embodiment.
FIG. 6 is a horizontal cross-sectional view illustrating an electrochemical cell according to a second embodiment.
FIG. 7 is a cross-sectional view illustrating an example of an electrochemical cell device according to a second embodiment.
FIG. 8 is an enlarged view of a region A illustrated in FIG. 7.
FIG. 9A is a cross-sectional view illustrating an example of an electrochemical cell according to a third embodiment.
FIG. 9B is a cross-sectional view illustrating another example of the electrochemical cell according to the third embodiment.
FIG. 9C is a cross-sectional view illustrating another example of the electrochemical cell according to the third embodiment.
FIG. 10A is an enlarged view of an example of a region B illustrated in FIG. 9A.
FIG. 10B is an enlarged view of another example of the region B illustrated in FIG. 9A.
FIG. 11A is a horizontal cross-sectional view illustrating an example of an electrochemical cell including a metal member including recessed portions in a first surface.
FIG. 11B is a plan view of the metal member illustrated in FIG. 11A as viewed from the first surface side.

### DESCRIPTION OF EMBODIMENTS

Hereinafter, embodiments of an electrochemical cell, an electrochemical cell device, a module, and a module housing device disclosed in the present application will be described in detail with reference to the accompanying drawings. Note that the disclosure is not limited by the following embodiments.

Note that the drawings are schematic and that the dimensional relationships between elements, the proportions of the elements, and the like may differ from the actual ones. Furthermore, there may be differences between the drawings in the dimensional relationships, proportions, and the like.

### First Embodiment

### Configuration of Electrochemical Cell

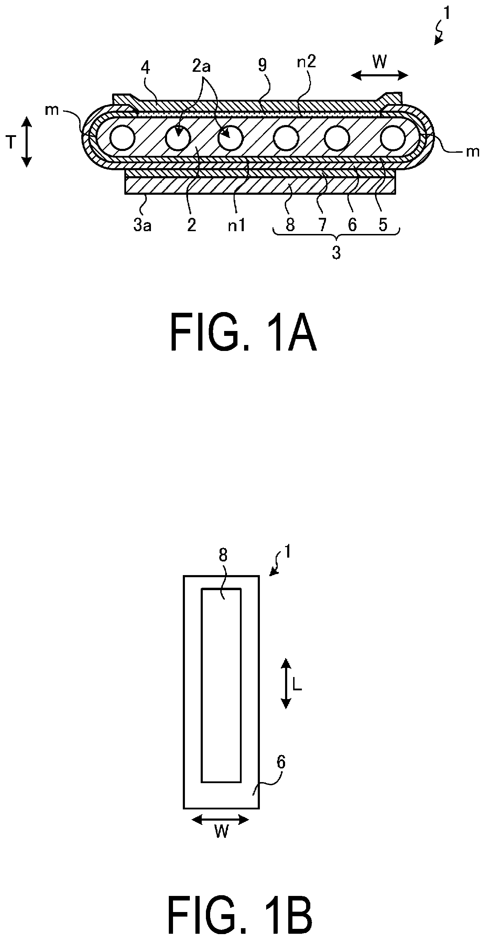

First, with reference to FIGs. 1A to 1D, an example of a solid oxide fuel cell will be described as an electrochemical cell according to a first embodiment. The electrochemical cell device may include a cell stack including a plurality of the electrochemical cells. The electrochemical cell device including the plurality of electrochemical cells is simply referred to as a cell stack device.

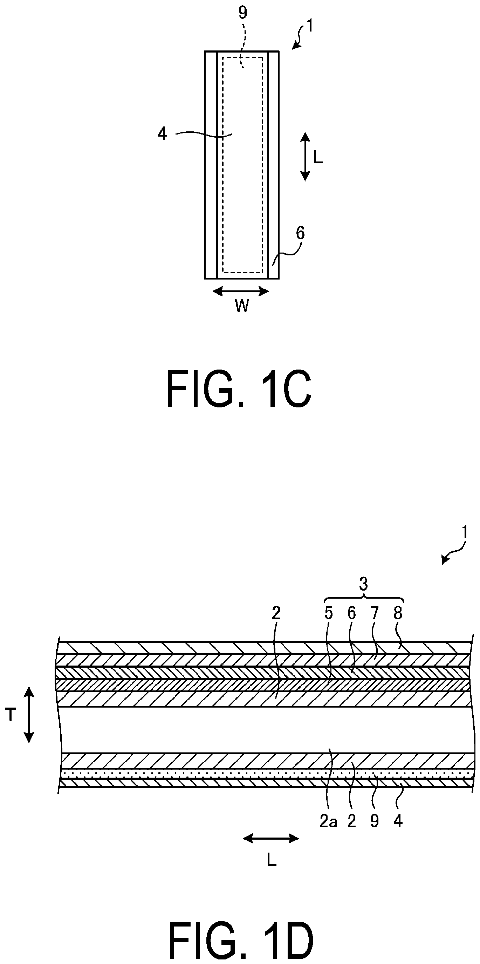

FIG. 1A is a horizontal cross-sectional view illustrating an example of an electrochemical cell according to the first embodiment, FIG. 1B is a side view of an example of the electrochemical cell according to the first embodiment when viewed from an air electrode side, FIG. 1C is a side view of an example of the electrochemical cell according to the first embodiment when viewed from an interconnector side, and FIG. 1D is a vertical cross-sectional view illustrating an example of the electrochemical cell according to the first embodiment. Note that FIGs. 1A to 1D each illustrate an enlarged view of a part of a corresponding one of configurations of the electrochemical cell. Hereinafter, the electrochemical cell may be simply referred to as a cell.

In the example illustrated in FIGs. 1A to 1D, the cell 1 is hollow flat plate-shaped and has an elongated plate shape. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The overall thickness in a thickness direction T of the cell 1 is from 1 mm to 5 mm.

As illustrated in FIG. 1A, the cell 1 includes a support substrate 2 having electrical conductivity, an element portion 3, an interconnector 4, and an electrically conductive member 9. The support substrate 2 has a columnar shape having a first surface n1 and a second surface n2 that are a pair of flat surfaces facing each other, and a pair of arc-shaped side surfaces m that connect the first flat surface n1 and the second flat surface n2.

The element portion 3 is provided on the first surface n1 of the support substrate 2. The element portion 3 includes a fuel electrode 5, a solid electrolyte layer 6, and an air electrode 8. In the example illustrated in FIG. 1A, the electrically conductive member 9 is located on the second surface n2 of the support substrate 2. Note that the cell 1 may include an intermediate layer 7 between the solid electrolyte layer 6 and the air electrode 8.

As illustrated in FIG. 1B, the air electrode 8 does not extend to the lower end of the cell 1. At the lower end portion of the cell 1, only the solid electrolyte layer 6 is exposed on a surface of the first surface n1. As illustrated in FIG. 1C, the interconnector 4 may extend to the lower end of the cell 1. At the lower end portion of the cell 1, the interconnector 4 and the solid electrolyte layer 6 are exposed on the surface. Note that, as illustrated in FIG. 1A, the solid electrolyte layer 6 is exposed at the surface at the pair of arc-shaped side surfaces m of the cell 1. The electrically conductive member 9 does not extend to the upper end and the lower end of the cell 1 and is not exposed to the outside of the cell 1.

Hereinafter, each of members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability and allows the fuel gas flowing through the gas-flow passages 2a to pass through to the fuel electrode 5. The support substrate 2 may have electrical conductivity. The support substrate 2 having electrical conductivity causes electricity generated in a power generating element to be collected in the interconnector 4.

The material of the support substrate 2 includes, for example, an iron group metal component and an inorganic oxide. For example, the iron group metal component may be, for example, Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material may be used. As the fuel electrode 5, a porous electrically conductive ceramic, for example, a ceramic containing ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is in solid solution may be referred to as stabilized zirconia. Stabilized zirconia also includes partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which from 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 has gas permeability. The open porosity of the air electrode 8 may be, for example, 20% or more, and particularly may be in a range from 30% to 50%.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion prevention layer. When an element such as strontium (Sr) contained in the air electrode 8 diffuses into the solid electrolyte layer 6, a resistance layer of, for example, SrZrOs is formed in the solid electrolyte layer 6. The intermediate layer 7 suppresses the diffusion of Sr and makes it difficult to form SrZrOs and other oxides having electrical insulation properties.

The material of the intermediate layer 7 is not particularly limited as long as the material is one generally used for the layer for diffusion prevention of an element between the air electrode 8 and the solid electrolyte layer 6. The material of the intermediate layer 7 includes, for example, cerium oxide (CeO₂) in which a rare earth element except cerium (Ce) is in solid solution. As the rare earth element, gadolinium (Gd), samarium (Sm), or the like is used.

The electrically conductive member 9 is located between the interconnector 4 and the support substrate 2. The electrically conductive member 9 has electrical conductivity. The electrical conductivity of the electrically conductive member 9 may be, for example, in a range from 1 × 10² S/m to 1 × 10⁷ S/m.

The electrically conductive member 9 contains a first element. The electrically conductive member 9 contains, for example, Ce. The first element has smaller first ionization energy and free energy of formation of oxide per mole of oxygen than chromium. Examples of the first element include Eu, Pr, Zr, and the like in addition to Ce. The free energy of formation is also called Gibbs energy of formation. The free energy of formation can be confirmed in, for example, a thermodynamic database such as "Thermodynamic Database for Nuclear Fuels and Reactor Materials". The first element may be located, as an oxide of such an element, in the electrically conductive member 9. Examples of the oxide of the first element include CeO₂, EuO, PrO₂, and ZrO₂. Hereinafter, the oxide of the first element is referred to as a first oxide.

The electrically conductive member 9 may contain, for example, one or more of the first elements. The electrically conductive member 9 may contain an element other than the first element. The electrically conductive member 9 may contain, for example, CeO₂ in which gadolinium (Gd), samarium (Sm), or the like is in solid solution, or ZrO₂ in which yttrium (Y), ytterbium (Yb), or the like is in solid solution, so-called stabilized zirconia or partially stabilized zirconia. The electrically conductive member 9 may contain a composite oxide containing the first element such as Ce₂Ti₂O₇, for example.

Furthermore, the electrically conductive member 9 contains metal particles. The metal particles are, for example, metal or alloy particles or the like. The metal particles may contain metals such as Ni, Cu, Co, Fe, and Ti, or alloys thereof, for example. Metals such as Ni, Cu, Co, Fe, and Ti or alloys thereof have high electrical conductivity. These metals or alloys have high electrical conductivity, meaning that the electricity generated in the element portion 3 can be easily collected by the interconnector 4. In particular, the metal Ni has high electrical conductivity, and can maintain the electrical conductivity even in a high temperature reaction atmosphere. In addition, Ni is contained in the support substrate 2 and can enhance the bonding property between the interconnector 4 and the support substrate 2.

The electrically conductive member 9 may contain an inorganic oxide in addition to the first oxide. Examples of the inorganic oxides contained in the electrically conductive member 9 include oxides or composite oxides of Ni, Fe, Mn, Co, Zn, Ti, In, Sn, Al, Si, Mg, Ca, Sr, Ba, and the like, and rare earth oxides such as oxides of Y, Yb, and Gd. The electrically conductive member 9 may contain, for example, titanium oxide, a rare earth oxide such as yttrium oxide (Y₂O₃), an ABO₃ perovskite oxide, or a composite oxide such as Y₂Ti₂O₇.

Examples of the ABO₃ perovskite oxide may include a lanthanum chromite-based perovskite oxide (LaCrO₃-based oxide), a lanthanum strontium titanium-based perovskite oxide (LaSrTiO₃-based oxide), and the like. These perovskite oxides have electrical conductivity, and are less likely to be reduced or oxidized even when the perovskite oxides come into contact with a fuel gas such as a hydrogen-containing gas and an oxygen-containing gas such as air.

The electrically conductive member 9 may contain 20 vol% to 70 vol% of the metal particles and 30 vol% to 80 vol% in total of the first oxide and the inorganic oxide, with respect to the total volume of the electrically conductive member 9. The total volume of the electrically conductive member 9 is the total volume of the metal particles, the first oxide, and the inorganic oxide. The content of the first oxide with respect to the total volume of the electrically conductive member 9 may be 0.1 vol% to 40 vol%, or may be 0.5 vol% to 30 vol%.

The electrically conductive member 9 may be porous with the open porosity in a range from 20% to 60%, for example.

The coefficient of thermal expansion of the electrically conductive member 9 may be in the range from 10 × 10⁻⁶/°C to 12 × 10⁻⁶/°C, for example. In that case, the coefficient of thermal expansion of the electrically conductive member 9 is close to the coefficients of thermal expansion of the interconnector 4 and the support substrate 2 in contact with the electrically conductive member 9, for example. Thus, the interconnector 4 is less likely to be peeled off from the support substrate 2 over a long period of time.

The thickness of the electrically conductive member 9 may be, for example, in a range from 10 µm to 200 µm for the sake of adhesion and uniformity.

The interconnector 4 is a dense metal member and hardly causes leakage of a fuel gas flowing through the gas-flow passages 2a inside the support substrate 2 and an oxygen-containing gas flowing outside the support substrate 2. The interconnector 4 is fixed to the support substrate 2 including the gas-flow passages 2a, by means of the electrically conductive member 9. The interconnector 4 may have a relative density of 93% or more; particularly 95% or more.

The interconnector 4 contains chromium. The interconnector 4 is made of, for example, stainless steel. The interconnector 4 may contain, for example, a metal oxide.

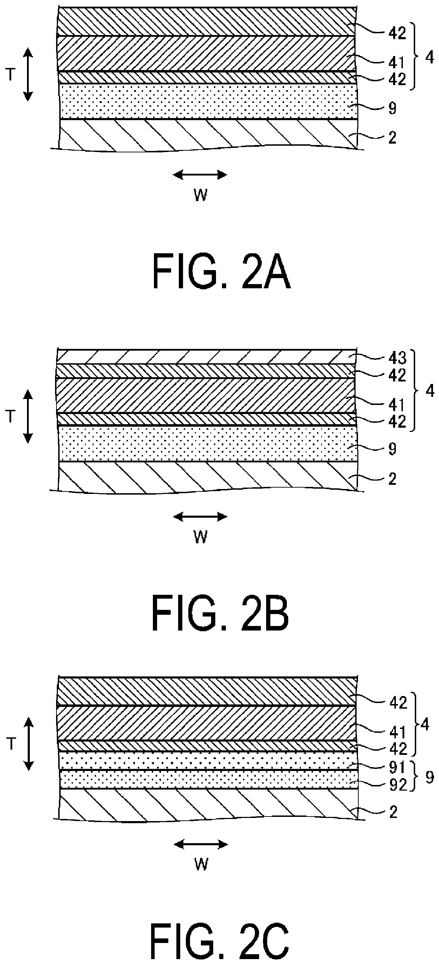

Now, a description will be given on the interconnector 4 and the electrically conductive member 9, which are metal members, with reference to FIGS. 2A to 2C. FIGS. 2A to 2C are cross-sectional views illustrating configuration examples of the interconnector and the electrically conductive member.

As illustrated in FIG. 2A, the interconnector 4 may include a first layer 41 and a second layer 42. The second layer 42 may have a higher chromium content than the first layer 41, for example. The second layer 42 contains, for example, a chromium oxide (Cr₂O₃). With the interconnector 4 thus including the second layer 42, the durability of the interconnector 4 is improved. Note that the interconnector 4 may partially include the second layer 42, or need not include the second layer 42. As illustrated in FIG. 2A, the second layer 42 may be separated from the electrically conductive member 9, or may be in contact with the electrically conductive member 9.

The surface of the interconnector 4 that is in contact with the electrically conductive member 9 is exposed to the fuel gas that has passed through the support substrate 2 and the electrically conductive member 9 from the gas-flow passages 2a. The fuel gas is a reducing gas having reducing properties, and the second layer 42 is usually difficult to grow on the surface of the interconnector 4 in contact with the electrically conductive member 9. However, the fuel gas often contains water vapor as described later. Also on the surface of the interconnector 4 in contact with the electrically conductive member 9, the second layer 42 may grow due to the effect of the water vapor contained in the fuel gas, and the internal resistance of the cell 1 may increase.

As described above, the electrically conductive member 9 in contact with the interconnector 4 contains the first element. This makes it difficult for the second layer 42 to grow. Thus, the possibility of an increase in the internal resistance of the interconnector 4 due to the growth of the second layer 42 can be reduced. This can reduce a decrease in the battery performance of the cell 1. Furthermore, the possibility of a decrease in the proportion of chromium contained in the first layer 41 due to the growth of the second layer 42 can be reduced. Therefore, the durability of the interconnector 4 is improved, so that the durability of the cell 1 can be improved.

When the support substrate 2 and the interconnector 4 are bonded to each other using the electrically conductive member 9 not containing the first element and used at a fuel cell operating temperature, the second layer 42 at the surface of the interconnector 4 in contact with the electrically conductive member 9 has a thickness of about several µm, for example, 4 µm. On the other hand, when the electrically conductive member 9 containing the first element, for example, CeO₂ is used at the fuel cell operating temperature, the second layer 42 has a thickness smaller than that in the case of using the electrically conductive member not containing the first element. For example, when the electrically conductive member 9 contains 1 vol% of CeO₂, the thickness of the second layer 42 is about 3 µm, and when the electrically conductive member 9 contains 30 vol% of CeO₂, the thickness of the second layer 42 is 1 µm or less. For example, the electrical conductivity of Cr₂O₃ is about 1 S/m to 4 S/m.

For example, the electrical conductivity of the electrically conductive member 9 containing 50 vol% of Ni as the metal particles and 50 vol% of TiO₂ (titanium oxide) as the inorganic oxide particles is 4 × 10⁵ S/m. The electrical conductivity of the electrically conductive member 9 containing 35 vol% of Ni, 35 vol% of TiO₂ (titanium oxide), and 30 vol% of CeO₂ (cerium oxide) as the first oxide is 7 × 10² S/m. With the second layer 42 thus being thinner due to the first element, the cell using the electrically conductive member 9 containing the first element has lower internal resistance than the cell using the electrically conductive member 9 not containing the first element.

The interconnector 4 may have a further layered structure. As illustrated in FIG. 2B, the interconnector 4 may further include a coating layer 43.

The coating layer 43 contains an element different from those in the first layer 41 and the second layer 42 serving as the base members. The coating layer 43 has a surface exposed to an oxidizing atmosphere. Thus, for example, the emission of chromium contained in the interconnector 4 can be reduced. Therefore, the durability of the interconnector 4 is improved, so that the durability of the cell 1 can be improved.

Also, the coating layer 43 may contain an oxide containing, for example, manganese (Mn) and cobalt (Co). Hereinafter, the oxide containing Mn and Co is referred to as a second oxide. The second oxide has electron conductivity. The second oxide has higher electrical conductivity than Cr₂O₃ and the first oxide. The second oxide may have electrical conductivity 100 times higher than that of Cr₂O₃, for example. A molar ratio of Mn contained in the second oxide may be greater than that of Co. The coating layer 43 may contain, for example, a second oxide having a molar ratio of Mn, Co, and O of 1.66 : 1.34 : 4. When the coating layer 43 contains the second oxide having such a composition, for example, the durability of the interconnector 4 can be increased as compared with the coating layer 43 containing a second oxide having a molar ratio of Mn, Co, and O of 1.5 : 1.5 : 4. The molar ratio of Mn, Co, and O can be calculated on the basis of the identification of a crystal phase using an X-ray diffractometer (XRD). Also, the second oxide may contain an element other than Mn and Co, for example, zinc (Zn), iron (Fe) or aluminum (Al). The coating layer 43 may contain or need not contain the first element.

Also, the coating layer 43 may be porous. The coating layer 43 may have a porosity of 5% or more and 40% or less, for example. When the interconnector 4 includes the porous coating layer 43 in this way, stress applied to the interconnector 4 from the outside can be relieved. Therefore, the durability of the interconnector 4 is improved, so that the durability of the cell 1 can be improved.

The electrically conductive member 9 may have a layered structure. As illustrated in FIG. 2C, the electrically conductive member 9 may include a first layer 91 and a second layer 92.

The first layer 91 is in contact with the interconnector 4. The second layer 92 is in contact with the support substrate 2. The first layer 91 and the second layer 92 have different compositions. The first layer 91 contains the first element. The first layer 91 containing the first element being in contact with the interconnector 4 makes it more difficult for the second layer 42 of the interconnector 4 to grow, and thus the possibility of an increase in the internal resistance of the interconnector 4 due to the growth of the second layer 42 is further reduced. This can further reduce a decrease in the battery performance of the cell 1.

The second layer 92 may contain or need not contain the first element. When the second layer 92 contains the first element, the content of the first element may be lower than that in the first layer 91.

As illustrated in FIG. 2C, the first layer 91 may be in contact with the interconnector 4, or may be separated from the interconnector 4. When the first layer 91 is separated from the interconnector 4, the first layer 91 may be located on the interconnector 4 side, that is, closer to the interconnector 4 than to the support substrate 2. This makes it difficult for the second layer 42 of the interconnector 4 to grow, and thus the possibility of an increase in the internal resistance of the interconnector 4 due to the growth of the second layer 42 is further reduced. This can reduce a decrease in the battery performance of the cell 1.

### Configuration of Cell Stack Device

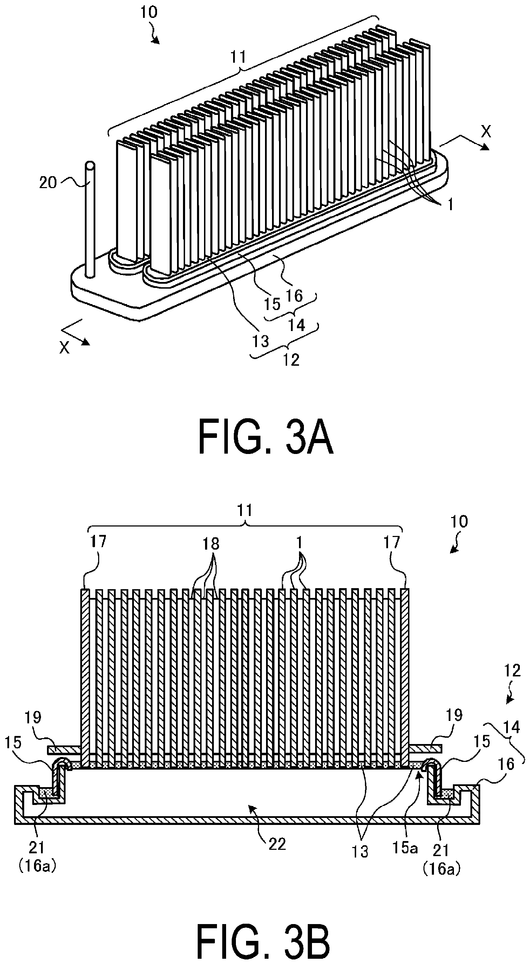

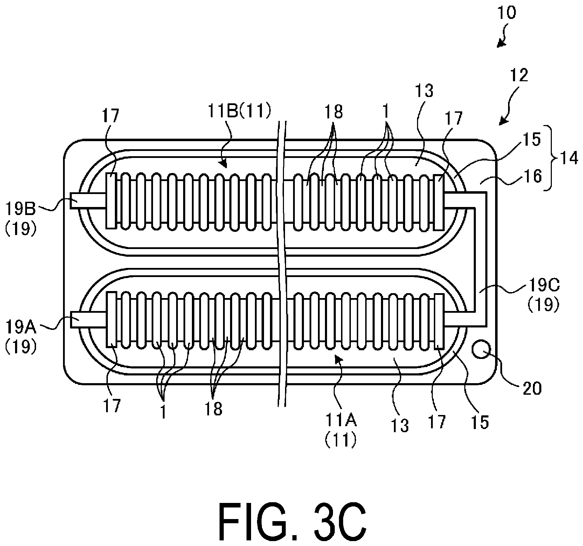

An electrochemical cell device according to the present embodiment using the cell 1 described above will be described with reference to FIGs. 3A to 3C. FIG. 3A is a perspective view illustrating an example of the electrochemical cell device according to the first embodiment, FIG. 3B is a cross-sectional view taken along a line X-X in FIG. 3A, and FIG. 3C is a top view illustrating an example of the electrochemical cell device according to the first embodiment.

As illustrated in FIG. 3A, a cell stack device 10 includes a cell stack 11 including a plurality of the cells 1 arrayed (layered) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, which constitute the support member 14, are made of metal.

As illustrated in FIG. 3B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21, with which the recessed groove 16a of the gas tank 16 is filled.

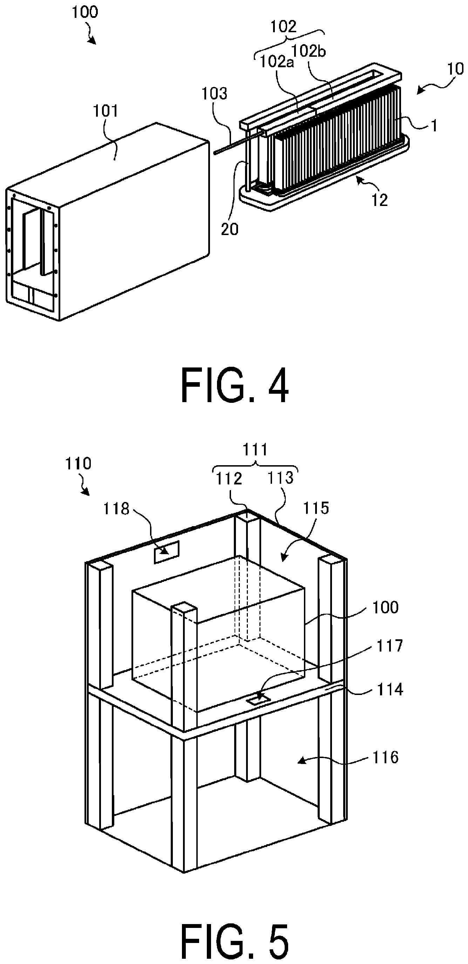

In the example illustrated in FIG. 3A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20, and is supplied from the gas tank 16 to the gas-flow passages 2a (see FIG. 1A) inside the cells 1. The fuel gas supplied to the gas tank 16 is produced by a reformer 102 (see FIG. 4), which will be described later.

A hydrogen-rich fuel gas can be produced, for example, by steam-reforming a raw fuel. When the fuel gas is produced by steam-reforming, the fuel gas contains water vapor.

In the example illustrated in FIG. 3A, the cell stack device 10 includes two rows of the cell stacks 11, two support bodies 15, and the gas tank 16. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, is longer than the distance between two end current collection members 17 located at two ends of the cell stack 11, for example. The width of the insertion hole 15a is, for example, greater than the length of the cell 1 in the width direction W (see FIG. 1A).

As illustrated in FIG. 3B, a bonding portion between the inner wall of the insertion hole 15a and the lower end portion of each of the cells 1 is filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 3B, connecting members 18 are each interposed between adjacent ones of the plurality of cells 1. Each of the connecting members 18 electrically connects in series the fuel electrode 5 of one of the adjacent ones of the cells 1 with the air electrode 8 of the other one of the adjacent ones of the cells 1. More specifically, each of the connecting members 18 connects the interconnector 4 electrically connected to the fuel electrode 5 of the one of the adjacent ones of the cells 1 and the air electrode 8 of the other one of the adjacent ones of the cells 1.

As illustrated in FIG. 3B, the end current collection members 17 are electrically connected to the cells 1 located at the outermost sides in the array direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 3A, the end current collection members 17 are not illustrated.

As illustrated in FIG. 3C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Module

A module 100 according to an embodiment of the present disclosure using the cell stack device 10 described above will be described with reference to FIG. 4. FIG. 4 is an exterior perspective view illustrating a module according to the first embodiment, with a front surface and a rear surface, which are a part of a storage container 101, removed and the cell stack device 10 of the fuel cell housed in the storage container 101 taken out rearward.

As illustrated in FIG. 4, the module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

Then, the fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

The above-discussed module 100 is configured such that the cell stack device 10 with improved battery performance is housed therein as described above, whereby the module 100 with the improved battery performance can be obtained.

### Module Housing Device

FIG. 5 is an exploded perspective view illustrating an example of a module housing device according to the first embodiment. A module housing device 110 according to the present embodiment includes an external case 111, the module 100 illustrated in FIG. 4, and an auxiliary device (not illustrated). The auxiliary device operates the module 100. The module 100 and the auxiliary device are housed in the external case 111. Note that in FIG. 5, the configuration is partially omitted.

The external case 111 of the module housing device 110 illustrated in FIG. 5 includes a support 112 and an external plate 113. A dividing plate 114 vertically partitions the interior of the external case 111. The space above the dividing plate 114 in the external case 111 is a module housing room 115 for housing the module 100. The space below the dividing plate 114 in the external case 111 is an auxiliary device housing room 116 for housing the auxiliary device that operates the module 100. Note that in FIG. 5, the auxiliary device housed in the auxiliary device housing room 116 is omitted.

The dividing plate 114 includes an air circulation hole 117 for causing air in the auxiliary device housing room 116 to flow into the module housing room 115 side. The external plate 113 included in the module housing room 115 includes an exhaust hole 118 for discharging air inside the module housing room 115.

In the module housing device 110 discussed above, the module 100 with improved battery performance is provided in the module housing room 115 as described above, whereby the module housing device 110 with the improved battery performance can be obtained.

Note that, in the embodiment described above, the case where the support substrate of the hollow flat plate-shaped is used has been exemplified; however, the embodiment can also be applied to a cell stack device using a cylindrical support substrate.

### Second Embodiment

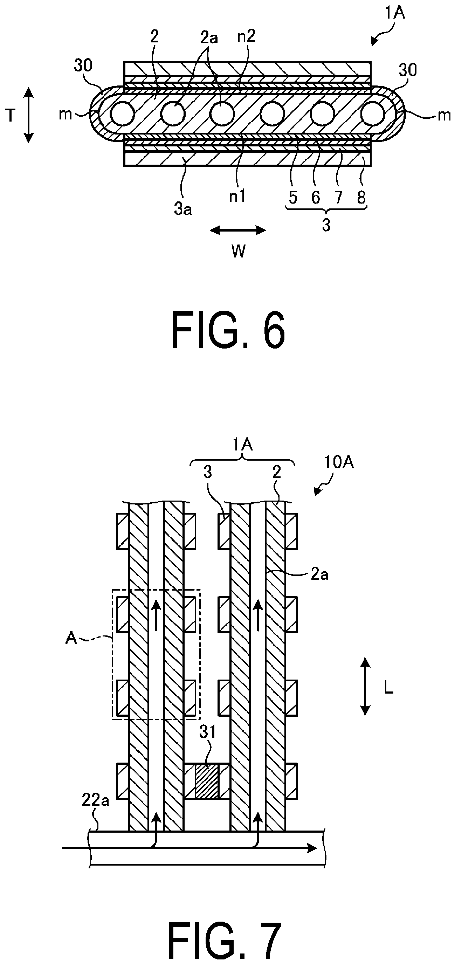

Next, an electrochemical cell and an electrochemical cell device according to a second embodiment will be described with reference to FIG. 6 to FIG. 8.

In the embodiment described above, a so-called "vertically striped type" cell stack device, in which only one element portion including a fuel electrode, a solid electrolyte layer, and an air electrode is provided on the surface of the support substrate, is exemplified. However, the present disclosure can be applied to a horizontally striped type electrochemical cell device with an array of so-called "horizontally striped type" electrochemical cells, in which a plurality of element portions are provided on the surface of a support substrate at mutually separated locations and adjacent element portions are electrically connected to each other.

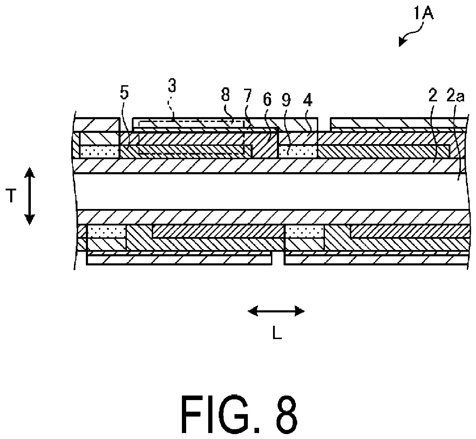

FIG. 6 is a horizontal cross-sectional view illustrating the electrochemical cell according to the second embodiment, FIG. 7 is a cross-sectional view illustrating an example of the electrochemical cell device according to the second embodiment, and FIG. 8 is an enlarged view of a region A illustrated in FIG. 7.

As illustrated in FIG. 6, the cell 1A according to the second embodiment includes the support substrate 2, a pair of the element portions 3, and a sealing portion 30. The support substrate 2 has a columnar shape having a first surface n1 and a second surface n2 that are a pair of flat surfaces facing each other, and a pair of arc-shaped side surfaces m that connect the first surface n1 and the second surface n2.

The pair of element portions 3 are located on the first surface n1 and the second surface n2 of the support substrate 2 so as to face each other. The sealing portion 30 is located covering the side surfaces m of the support substrate 2.

As illustrated in FIG. 7, a cell stack device 10A includes a plurality of cells 1A extending in the length direction L from a pipe 22a that distributes a fuel gas. The cell 1A includes a plurality of element portions 3 on the support substrate 2. The gas-flow passages 2a, through which a fuel gas from the pipe 22a flows, are provided inside the support substrate 2.

The cells 1A are electrically connected to each other via a connecting member 31. The connecting member 31 is located between the element portions 3 each included in a corresponding one of the cells 1A and electrically connects adjacent ones of the cells 1A to each other. Specifically, the air electrode 8 of the element portion 3 of one of the adjacent ones of the cells 1A, the fuel electrode 5 of the other one of the cells 1A, and the interconnector 4 electrically bonded using the electrically conductive member 9 are connected to each other by the connecting member 31.

As illustrated in FIG. 8, the interconnector 4 is located so as to connect the element portions 3 adjacent to each other in the length direction L. The electrically conductive member 9 is located between the interconnector 4 and the support substrate 2.

With the interconnector 4 and the support substrate 2 bonded to each other using the electrically conductive member 9, the interconnector 4 is less likely to be peeled off from the support substrate 2, and thus the durability of the cells 1A is improved. Thus, the battery performance of the cell stack device 10A is improved.

### Third Embodiment

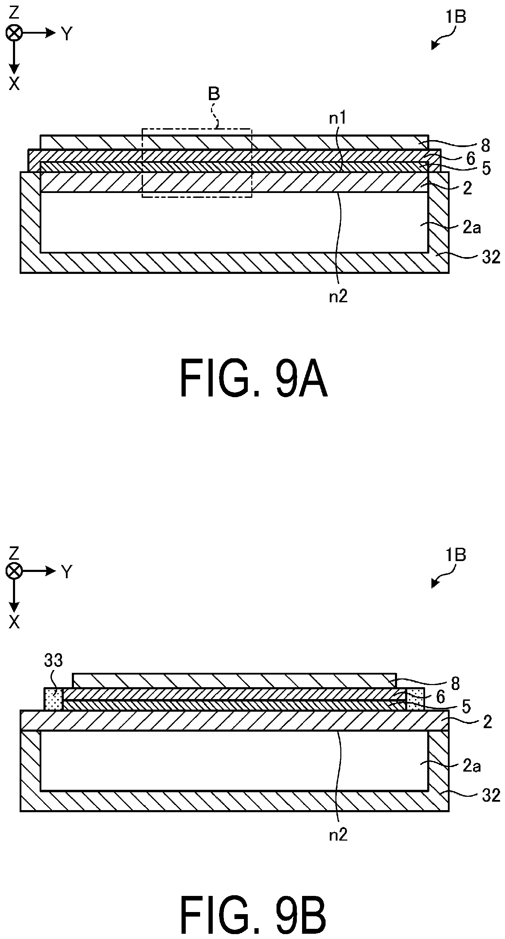

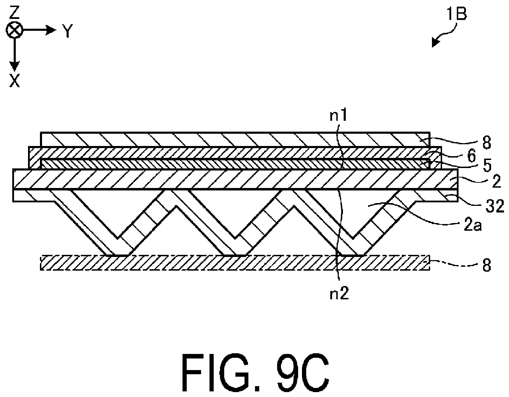

FIG. 9A is a cross-sectional view illustrating an example of an electrochemical cell according to a third embodiment. FIGs. 9B and 9C are cross-sectional views illustrating other examples of the electrochemical cell according to the third embodiment. A cell 1B includes a metal support body and the element portion 3. The metal support body includes the metal support substrate 2 having the pair of first surface n1 and second surface n2 facing each other and a channel member 32. The element portion 3 is disposed on the first surface n1 of the support substrate 2, and includes the fuel electrode 5, the solid electrolyte layer 6, and the air electrode 8. The fuel electrode 5 is located on the first surface n1 of the support substrate 2, the solid electrolyte layer 6 is located on the fuel electrode 5, and the air electrode 8 is located on the solid electrolyte layer 6. Note that the element portion 3 may include an intermediate layer between the solid electrolyte layer 6 and the air electrode 8.

The metal support body includes the gas-flow passage 2a formed by the second surface n2 and the channel member 32. The second surface n2 is on the opposite side to the first surface n1 of the support substrate 2 on which the element portion 3 is disposed.

The support substrate 2 that is a metal member has gas permeability that allows a gas flowing through the gas-flow passage 2a to permeate to the fuel electrode 5. The channel member 32 has a gas blocking properties and thus helps prevent a gas from flowing between the gas-flow passage 2a and the outside of the cell 1B, that is, helps prevent mixing of a fuel gas and an oxygen-containing gas such as air. In the example illustrated in FIG. 9A, the gas-flow passage 2a is formed by the support substrate 2 and the channel member 32 having a U-shaped cross-section.

The support substrate 2 and the channel member 32 may be made of, for example, one or a plurality of metal plates. A material of the metal plate may contain chromium. The metal plate may include a conductive coating layer. The support substrate 2 and the channel member 32 electrically connect adjacent ones of the cells 1B to each other.

In the example illustrated in FIG. 9A, the side surface of the fuel electrode 5 is covered with the solid electrolyte layer 6 to hermetically seal the gas-flow passage 2a through which the fuel gas flows. As illustrated in FIG. 9B, the side surface of the fuel electrode 5 may be covered and sealed with a dense sealing material 33. The sealing material 33 covering the side surface of the fuel electrode 5 may have electrical insulation properties. The material of the sealing material 33 may be, for example, glass or a ceramic.

The gas-flow passages 2a may be formed using the channel member 32 having unevenness as illustrated in FIG. 9C.

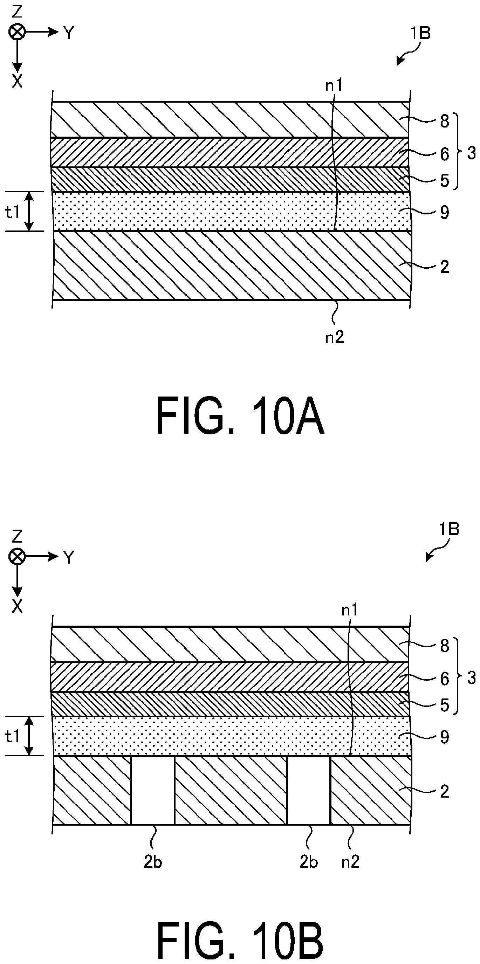

FIG. 10A is an enlarged view illustrating an example of the region B illustrated in FIG. 9A. FIG. 10B is an enlarged view illustrating another example of the region B illustrated in FIG. 9A. In FIG. 10A and FIG. 10B, the electrically conductive member 9 electrically connects the support substrate 2, which is a metal member, and the fuel electrode 5. The electrically conductive member 9 may have a thickness t1 in a range from 10 µm to 200 µm, for example.

The support substrate 2 may be a flat plate-shaped porous body having an open porosity of, for example, 30% or more, particularly in a range from 35% to 50%. Furthermore, as illustrated in FIG. 10B, the support substrate 2 may be a dense plate including a plurality of through holes 2b penetrating the support substrate 2 in the thickness direction. With the support substrate 2 thus having such an open porosity or the through holes 2b, the fuel gas supplied to the gas-flow passages 2a can reach the fuel electrode 5.

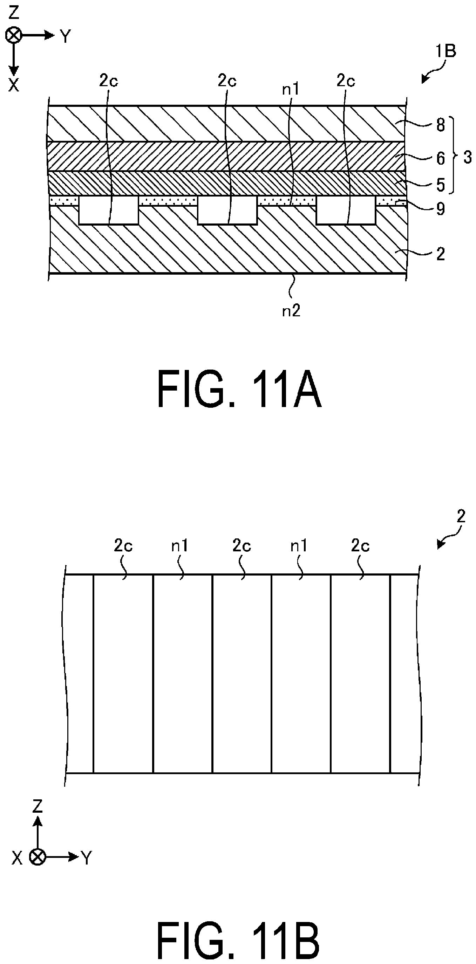

The support substrate 2 that is a metal member may have recessed portions or projecting portions on at least one of the first surface n1 and the second surface n2. FIG. 11A is a horizontal cross-sectional view illustrating an example of an electrochemical cell including a metal member including recessed portions in a first surface. FIG. 11B is a plan view of the metal member illustrated in FIG. 11A as viewed from the first surface side. As illustrated in FIG. 11A, the support substrate 2, which is a metal member, includes recessed portions 2c in the first surface n1. When the support substrate 2 thus includes the recessed portions 2c in the first surface n1, the recessed portions 2c need not be in contact with the fuel electrode 5. That is, the cell 1B may be provided with gaps between the fuel electrode 5 and the recessed portions 2c of the first surface n1 of the support substrate 2. In this case, the gaps between the fuel electrode 5 and the recessed portions 2c of the first surface n1 may serve as the gas-flow passages 2a.

In the cell 1B illustrated in FIG. 11A, the support substrate 2 that is a metal member also serves as the channel member 32 (see FIG. 9A), and thus the support substrate 2 need not have gas permeability between the first surface n1 and the second surface n2. The cell 1B illustrated in FIG. 11A also includes the electrically conductive member 9 between the first surface n1 and the fuel electrode 5. As illustrated in FIG. 11A, the electrically conductive member 9 is located between the fuel electrode 5 and the first surface n1 including no recessed portion 2c. The electrically conductive member 9 may be located between the first surface n1 and the fuel electrode 5 over the entire surface of the first surface n1 facing the fuel electrode 5. In that case, the electrically conductive member 9 located between the recessed portions 2c and the fuel electrode 5 may be in contact with the fuel electrode 5 so as to be located away from the support substrate 2, or may be in contact with the recessed portions 2c of the support substrate 2 so as to be located away from the fuel electrode 5.

The support substrate 2 is a metal member containing chromium, and is, for example, stainless steel. The support substrate 2 may include a second layer containing chromium oxide (Cr₂O₃) as in the second layer 42 of the interconnector 4 which is the above-described metal member. The electrically conductive member 9 in contact with the support substrate 2 contains a first element. This makes it difficult for the second layer to grow, and thus an increase in internal resistance of the support substrate 2 due to the growth of the second layer is less likely to occur. This can reduce a decrease in the battery performance of the cell 1B. With the support substrate 2 that is a metal member and the fuel electrode 5 thus bonded to each other using the electrically conductive member 9, the support substrate 2 and the fuel electrode 5 are less likely to be peeled off from each other, whereby the durability of the cell 1B is improved.

### Other Variations

Other variations of the embodiment will be described.

In the above embodiments, a fuel cell, a fuel cell stack device, a fuel cell module, and a fuel cell device are illustrated as examples of the "electrochemical cell", the "electrochemical cell device", the "module", and the "module housing device"; they may also be an electrolytic cell, an electrolytic cell stack device, an electrolytic module, and an electrolytic device, respectively, as other examples. The electrolytic cell includes a hydrogen electrode and an oxygen electrode, and decomposes water vapor into hydrogen and oxygen when electric power is supplied. While oxide ion conductors or hydrogen ion conductors are described as examples of the electrolyte material of the electrochemical cell in the above embodiment, the electrolyte material may be a hydroxide ion conductor.

While it is described in the above embodiment that the electrically conductive member 9 is located between the interconnector 4 and the support substrate 2 to bond the interconnector 4 and the support substrate 2, the electrically conductive member 9 may be located between the interconnector 4 and the fuel electrode 5 to bond the interconnector 4 and the fuel electrode 5 in another example. The support substrate 2 and the fuel electrode 5 both have electrical conductivity and are both gas permeable members through which the fuel gas passes.

A gas sealing member such as glass may be located at an end portion of the electrically conductive member 9, for example, so that the electrically conductive member 9 is hardly exposed to an oxidizing atmosphere.

While the present disclosure has been described in detail, the present disclosure is not limited to the aforementioned embodiments, and various changes, improvements, and the like can be made without departing from the gist of the present disclosure.

An electrochemical cell (cell 1) according to the embodiment includes a gas permeable member (the support substrate 2 or the fuel electrode 5) through which a reducing gas is permeable, the gas permeable member having electrical conductivity; a metal member (interconnector 4) that contains chromium and is connected to the gas permeable member; and the electrically conductive member 9 that is located between the gas permeable member and the metal member. The electrically conductive member 9 is porous and contains metal particles, and a first element whose first ionization energy and free energy of formation of an oxide per mole of oxygen are smaller than those of chromium. This improves the battery performance.

The electrically conductive member 9 according to the embodiment includes the first layer 91 that is located on the side of the metal member and contains the first element. This improves the battery performance.

The metal particles according to the embodiment contain nickel (Ni). This improves the battery performance.

The first element according to the embodiment contains cerium (Ce). This improves the battery performance.

The electrically conductive member 9 according to the embodiment further contains titanium oxide. This improves the battery performance.

The metal member according to the embodiment includes a base member facing the electrically conductive member 9 and the coating layer 43 covering the base member and exposed to an oxidizing atmosphere. This improves the battery performance.

The electrochemical cell device (cell stack device 10) according to the embodiment includes the cell stack 11 including the electrochemical cells (cells 1) described above. As a result, the electrochemical cell device can be obtained that is improved in battery performance.

The module 100 according to the embodiment includes the electrochemical cell device (the cell stack device 10) described above, and the storage container 101 housing the electrochemical cell device (cell stack device 10). As a result, the module 100 can be obtained that is improved in battery performance.

The module housing device 110 according to the embodiment includes the module 100 described above, the auxiliary device configured to operate the module 100, and the external case housing the module 100 and the auxiliary device. As a result, the module housing device 110 can be obtained that is improved in battery performance.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1, 1A, 1B Cell
2 Support substrate
3 Element portion
4 Interconnector
5 Fuel electrode
6 Solid electrolyte layer
7 Intermediate layer
8 Air electrode
9 Electrically conductive member
10 Cell stack device
11 Cell stack
12 Fixing member
13 Fixing material
14 Support member
15 Support body
16 Gas tank
17 End current collection member
18 Connecting member
100 Module
110 Module housing device

## Claims

1. An electrochemical cell comprising:
a gas permeable member through which a reducing gas is permeable, the gas transmitting member having electrical conductivity;
a metal member containing chromium and connected to the gas permeable member;
and
an electrically conductive member located between the gas permeable member and the metal member, the electrically conductive member being porous, wherein
the electrically conductive member contains metal particles, and a first element whose first ionization energy and free energy of formation of an oxide per mole of oxygen are smaller than those of chromium.

2. The electrochemical cell according to claim 1, wherein the electrically conductive member comprises a first layer located on a side of the metal member and containing the first element.

3. The electrochemical cell according to claim 1 or 2, wherein the metal particles contain nickel (Ni).

4. The electrochemical cell according to any one of claims 1 to 3, wherein the first element contains cerium (Ce).

5. The electrochemical cell according to any one of claims 1 to 4, wherein the electrically conductive member further contains titanium oxide.

6. The electrochemical cell according to any one of claims 1 to 5, wherein the metal member comprises a base member facing the electrically conductive member, and a coating layer covering the base member and exposed to an oxidizing atmosphere.

7. An electrochemical cell device comprising:
a cell stack comprising the electrochemical cell according to any one of claims 1 to 6.

8. The electrochemical cell device according to claim 7, wherein the metal member is an interconnector electrically connecting adjacent element portions.

9. A module comprising:
the electrochemical cell device according to claim 7 or 8; and
a storage container housing the electrochemical cell device.

10. A module housing device comprising:
the module according to claim 9;
an auxiliary device configured to operate the module; and
an external case housing the module and the auxiliary device.
